# EUROPÄISCHE PATENTSCHRIFT

(11) **EP 2 314 806 B1**
(45) Veröffentlichungstag und Bekanntmachung des Hinweises auf die Patenterteilung: **04.11.2015**
(21) Anmeldenummer: 10188364.3
(22) Anmeldetag: 21.10.2010
(51) Int. Cl.: E05B 19/00, A61B 5/11, B60R 25/00, B60K 28/06, G01C 21/34

(54) **Kfz-System mit einem Kfz-Zündschlüssel und mit einer Kfz-Navigationsvorrichtung und Verfahren**
Motor vehicle system with motor vehicle ignition key and with motor vehicle navigation device, and corresponding method
Système de véhicule automobile avec une clé de contact de véhicule automobile, et avec un dispositif de navigation de véhicule automobile, et procédé correspondant

(30) Priorität: 22.10.2009 EP 09013367
(43) Veröffentlichungstag der Anmeldung: 27.04.2011
(73) Patentinhaber: Fraunhofer-Gesellschaft zur Förderung der Angewandten Forschung e.V., 80686 München (DE)
(72) Erfinder: Podolak, Christian, 79111 Freiburg im Breisgau (DE); Mörsdorf, Hans Joachim, 90763, Fürth (DE); Arzt, Christian, 91058, Erlangen (DE); Rulsch, Martin, 91054, Erlangen (DE); Ershov, Sergey, 91054, Erlangen (DE); Couronné, Robert, 91058, Erlangen (DE)
(74) Vertreter: Schenk, Markus

(56) Entgegenhaltungen:
- EP-A1- 1 583 040
- EP-A2- 1 304 250
- WO-A1-2010/064178
- WO-A2-01/82789
- JP-A- 10 148 539
- JP-A- 2007 292 505
- US-B1- 7 373 820

## Beschreibung

Die vorliegende Erfindung bezieht sich auf ein Kfz-System mit einem Kfz-Zündschlüssel und einer Kfz-Navigationsvorrichtung sowie ein Verfahren welche in Verbindung mit einem Kfz benutzt werden können.

In der heutigen Welt ist Mobilität ein wichtiger Faktor. Die meisten Menschen verfügen daher über ein eigenes Kfz. Jedes Kfz hat typischerweise einen oder mehrere dem Kfz zugeordnete Kfz-Zündschlüssel. Hierbei existieren verschiedene Ausführungsformen von Kfz-Zündschlüsseln. Während früher Kfz-Zündschlüssel lediglich aus einem Schlüsselbart mit einem Schlüsselkörper bestanden, so verfügen sie heute zum Teil über komplexe E-lektronikschaltkreise. Die Wegfahrsperre beim modernen Kfz war hierbei ein erster Schritt zur Integration von Elektronik in einen Kfz-Zündschlüssel. Hierbei wird lediglich ein kleiner RFID-Transponder dem Schlüssel hinzugefügt, welcher beim Starten des Kfz, in Verbindung mit einem RFID-Lesegerät im Kfz eine Authentifizierung zum Starten des Kfz durchführt. Zusätzlich zur Wegfahrsperre verfügen die meisten heutigen Kfz-Zündschlüssel über eine Fernbedienungsfunktion zum Öffnen der Türen des Kfz, wobei die Fernbedienung ihre Daten zum Kfz früher über Infrarot übertragen hat, dies aber heute nahezu vollständig durch eine UHF-Funkübertragung ersetzt worden ist. Ein Kfz-Zündschlüssel mit einem eingebauten RFID-Transponder erhält eine eigene Seriennummer. Dies ermöglicht dem Kfz eine Identifizierung des Kfz-Benutzers und eine Einstellung des Kfz auf den Kfz-Benutzer. So können beispielsweise Sitzposition und Spiegeleinstellungen dem jeweiligen Kfz-Benutzer angepasst werden. Weiterhin können auf den Kfz-Zündschlüsseln fahrzeugspezifische Daten, beispielsweise die Seriennummer des Fahrzeugs, aber auch wartungsrelevante Daten, beispielsweise der Kilometerstand oder Fehlercodes, gespeichert werden. Diese Daten können von einer Fachwerkstatt ausgelesen und als Basis für eine Schnelldiagnose verwendet werden.

Eine weitere technische Neuerung im automobilen Bereich bilden Kfz-Navigationsgeräte. Kfz-Navigationsgeräte ersetzen mehr und mehr das umständliche Kartenlesen. Während früher Reiserouten mit Hilfe von Karten im vornhinein geplant werden mussten, so genügt heute die Eingabe eines Zielortes in ein Navigationsgerät. Navigationsgeräte sind in der Lage, unter Berücksichtigung verschiedenster Bedingungen eine optimale Route von einem Startpunkt zu einem gewählten Ziel zu finden. Hierbei kann das Navigationsgerät abhängig von den Wünschen des Benutzers die Route anpassen. Beispielsweise hat der Benutzer die Wahl zwischen der kürzesten und der schnellsten Route. Heutige Navigationsgeräte verfügen zudem über umfangreiche Datenbanken, in welchen die Adressen von wichtigen Orten gespeichert sind. Dies können beispielsweise Parkhäuser, Bahnhöfe, Flughäfen, aber auch Restaurants oder Sehenswürdigkeiten sein. Navigationsgeräte existieren in verschiedensten Ausführungsformen und Funktionsumfängen. Derzeit existieren Navigationsgeräte, welche fest in ein Kfz eingebaut sind, und Navigationsgeräte, welche portabel sind und sich in jedem Kfz nachrüsten lassen.

Heute ist das Auto für die meisten das Fortbewegungsmittel der Wahl - dabei spielt es keine Rolle, ob es sich um die lange Reise in den Urlaub oder die Fahrt zum Bäcker an der Ecke handelt. Der moderne Mensch bewegt sich nicht mehr oder zumindest nicht mehr als absolut nötig. Dieses Verhalten zieht zahlreiche "Wohlstandskrankheiten" nach sich: Fettleibigkeit, Hypertonie, Diabetes und (als Folge) Herz-Kreislauf-Krankheiten, welche durch Bewegungsmangel stark begünstigt werden. Wenngleich der moderne Mensch sich nach einem gesunden und durchtrainierten Körper sehnt, scheitert eine Umsetzung der guten Vorsätze meistens an der zu überwindenden Trägheits - bzw. Bequemlichkeitsschwelle "innerer Schweinehund"). Aufgrund des demographischen Wandels ist eine lebenslange Prävention unerlässlich, um auch im fortgeschrittenen Alter eine hohe Lebensqualität zu erhalten. Eine regelmäßigere Bewegung wäre für viele Menschen daher nötig. Im Leistungssport werden schon seit längerem Systeme zur Überwachung der körperlichen Fitness eines Sportlers eingesetzt. Hierbei existieren z.B. Pulssensoren, aber auch Bewegungssensoren, welche die Bewegung des Sportlers aufzeichnen. Diese Systeme sind heutzutage auch für Hobbysportler verfügbar. Beispielsweise existieren Systeme zur Pulsmessung, welche aus einem Brustgurt und einer Uhr bestehen. Jedoch geben diese Systeme keinen Aufschluss über die zurückgelegte Wegstrecke. Ein einfaches System zur Protokollierung der zurückgelegten Wegstrecke sind mechanische Schrittzähler. Diese haben unter anderem den Nachteil, dass sie ungenau arbeiten und die Variation der Schrittlänge nicht berücksichtigen. Eine andere Möglichkeit zur Protokollierung von Bewegungsdaten sind Bewegungssensoren, welche mit Hilfe eines 3D-Beschleunigungssensors die Bewegungen eines Benutzers aufzeichnen. Diese Sensoren können eng am Körper befestigt werden und beim Sport sämtliche Bewegungen erfassen. Ein Nachteil all dieser Geräte ist, dass sie sich an passionierte Hobby- bzw. Profisportler richten. Vor Beginn einer sportlichen Tätigkeit müssen diese Geräte erst am Sportler angelegt bzw. aktiviert werden. Alltägliche Bewegungen, wie beispielsweise der Fußweg zum Auto oder das Treppensteigen daheim oder im Büro, werden von diesem System typischerweise nicht erfasst, da sich ein Benutzer im alltäglichen Leben nicht mit zusätzlichen Geräten belasten will. Ein weiterer Nachteil ist, dass vor allem nicht sportbegeisterte Menschen kaum Interesse an derlei Zusatzprodukten haben, und sie daher keinen Aufschluss über ihre alltäglichen Bewegungen besitzen. Allerdings sind für diese Menschen oft die alltäglichen Bewegungen die einzigen sportlichen Aktivitäten, welche sie vollführen.

Die US 7373820 zeigt ein Grundprinzip und allgemeine Anwendung zur Erfassung der menschlichen Bewegungsaktivität.

Die US 6160478 und US 6658292 zeigen Beispiele von Aktivitätsüberwachungsgeräten für die medizinische Anwendung bzw. für die Patientenversorgung als tragbare und implantierbare Sensoren.

Die US 7512515 zeigt Beispiele zur Erfassung der menschlichen Bewegungsaktivitäten in Freizeitanwendung bzw. Lifestyle-Szenarien.

Die JP 10 148539 zeigt ein tragbares Navigationssystem, welches über einen Schrittzähler die Anzahl der Schritte zählt, wenn ein Benutzer das tragbare Navigationssystem mit sich herumträgt, wobei die Fahrtroute unter Berücksichtigung der Bewegungsdaten berechnet wird.

Eine Aufgabe der vorliegenden Erfindung ist es, ein Konzept zu schaffen, welches es ermöglicht, für eine breitere Bevölkerungsgruppe eine Aufzeichnung der alltäglichen Bewegungen zu erzielen und damit die Möglichkeit, auf eine übertriebene Bewegungslosigkeit zu reagieren bzw. die Hemmschwelle bzw. den Zusatzaufwand zu reduzieren, der viele Menschen davon abhält, eine Überwachung der alltäglichen Aktivität zu erfassen, um darauf reagieren zu können.

Ein Kfz-System nach Anspruch 1 und ein Verfahren nach Anspruch 4 lösen diese Aufgabe.

Ein Kerngedanke von Ausführungsbeispielen liegt darin, dass die alltäglichen Bewegungen eines Benutzers besser aufgezeichnet werden können und auf eine übertriebene Bewegungslosigkeit besser reagiert bzw. die Hemmschwelle bzw. der Zusatzaufwand der viele Menschen davon abhält, eine Überwachung der alltäglichen Aktivität zu erfassen, reduziert werden kann, wenn in einem Kfz-Schlüssel ein Bewegungssensor integriert ist, wobei der Bewegungssensor ausgelegt ist, um eine Bewegung des Kfz-Schlüssels zu erfassen und daraus Bewegungsdaten zu gewinnen, welche in einem Speicher des Kfz-Schlüssels aufgezeichnet werden und über eine Schnittstelle an ein externes Gerät ausgegeben werden können. Ausgehend davon, dass ein Benutzer den Kfz-Schlüssel bei seinen alltäglichen Bewegungen mit sich herumträgt, wird eine unaufwändige Protokollierung der alltäglichen Bewegungen des Benutzers für breite Bevölkerungsgruppen ermöglicht.

Ein Vorteil von Ausführungsbeispielen ist somit, dass durch die Integration eines Bewegungssensors in einen Kfz-Schlüssel, die Bewegungen des Kfz-Schlüssel und damit die Bewegungen des Benutzers aufgezeichnet werden können, ohne dass der Benutzer ein zusätzliches Gerät mit sich herum tragen muss. Ein weiterer Vorteil ist, dass der Benutzer den Kfz-Schlüssel zur Protokollierung seiner Bewegungsdaten nicht erst am Körper anlegen muss, wie beispielsweise bei Pulssensoren, sondern ihn lose beispielsweise in einer Hosentasche am Körper tragen kann.

Ein weiterer Aspekt der vorliegenden Erfindung basiert auf der Erkenntnis dass ein Benutzer besser zu sportlichen Aktivitäten animiert werden kann, wenn eine Kfz-Navigationsvorrichtung eine Schnittstelle zum Empfang von Bewegungsdaten eines Kfz-Benutzers, die durch einen am Körper getragenen Sensor erfasst sind, aufweist und die weiterhin eine Einrichtung zum Berechnen einer Fahrtroute unter Berücksichtigung der Bewegungsdaten umfasst. Die Berücksichtigung der Bewegungsdaten bei der Berechnung der Fahrtroute ermöglicht eine bessere, insbesondere unaufwändige und für den Kfz-Benutzer gegebenenfalls unmerkliche Unterstützung zur Integration von sportlichen Aktivitäten in den Alltag und eine bessere Motivation zu sportlichen Aktivitäten.

Ein weiterer Vorteil der vorliegenden Erfindung ist somit, dass durch die Berechnung einer Fahrtroute unter Berücksichtigung der Bewegungsdaten des Kfz-Benutzers, der Kfz-Benutzer zu sportlichen Aktivitäten motiviert wird, welche sich in den Alltag des Benutzers integrieren lassen.

Ein weiterer Aspekt von Ausführungsbeispielen basiert auf der Erkenntnis, dass die alltäglichen Bewegungen eines Benutzers besser aufgezeichnet werden können und der Benutzer besser zu sportlicher Aktivität motiviert wenn kann, wenn ein Kfz-System einen Kfz-Zündschlüssel und eine Kfz-Steuereinrichtung umfasst, wobei der Kfz-Zündschlüssel einen Bewegungssensor zur Erfassung einer Bewegung des Kfz-Zündschlüssels und zur Gewinnung von Bewegungsdaten aus der erfassten Bewegung, sowie einen Speicher zum Aufzeichnen der gewonnen Bewegungsdaten und eine erste Schnittstelle zum Ausgeben der Bewegungsdaten an die Kfz-Steuereinrichtung umfasst, und wobei die Kfz-Steuervorrichtung dem Kfz-Schlüssel zugeordnet ist und eine zweite Schnittstelle zum Empfang der Bewegungsdaten und zum Durchführen von Kfz-Steuerungsaufgaben umfasst. Ausgehend davon, dass ein Benutzer den Kfz-Zündschlüssel bei seinen alltäglichen Bewegungen mit sich herumträgt, wird so eine bessere Protokollierung der alltäglichen Bewegungen des Benutzers ermöglicht, weiterhin wird, da die Kfz-Steuereinrichtung Steueraufgaben durchführen kann eine bessere Integration von sportlichen Aktivitäten in die alltäglichen Bewegungen des Benutzers ermöglicht.

Ein weiterer Vorteil von Ausführungsbeispielen ist somit, dass wenn die Bewegungen eines Kfz-Benutzers aufgezeichnet werden und von einer Kfz-Steuereinrichtung genutzt werden um Steueraufgaben durchzuführen, die Kfz-Steuereinrichtung den Kfz-Benutzer bei der Integration von sportlichen Aktivitäten in seine alltäglichen Bewegungen unterstützen kann und dem Kfz-Benutzer eine Rückmeldung über seine sportlichen Aktivitäten geben kann.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Kfz-Zündschlüssels;
- Fig. 2: eine schematische Darstellung einer Kfz-Navigationsvorrichtung ;
- Fig. 3: eine schematische Darstellung eines Kfz-Systems ; und
- Fig. 4: eine schematische Darstellung eines Kfz-Systems gemäß einem Ausführungsbeispiel der vorliegenden Erfindung;

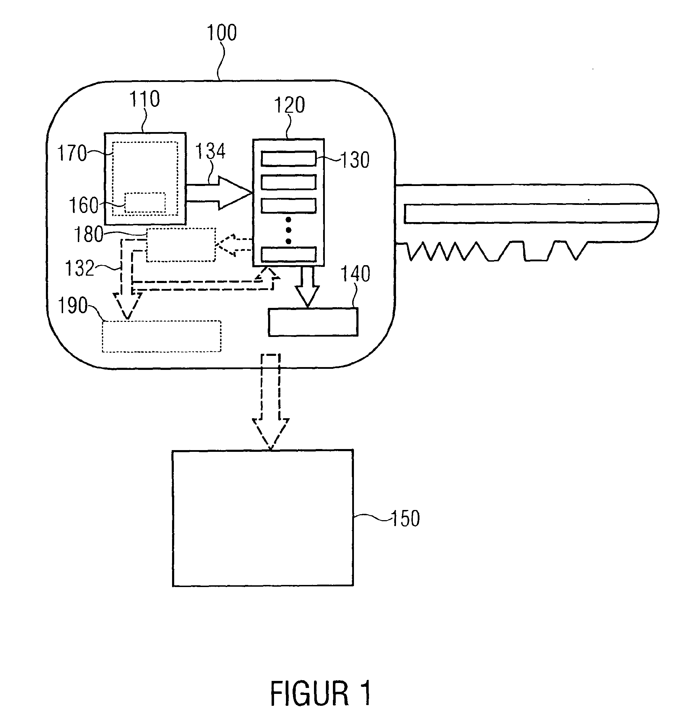

Fig. 1 zeigt eine schematische Darstellung eines Kfz-Zündschlüssels 100.

Der Kfz-Zündschlüssel 100 umfasst einen Bewegungssensor 110, einen Speicher 120 und eine Schnittstelle 140. Weiterhin zeigt Fig. 1 ein externes Gerät 150. Der Bewegungssensor 110 ist mit dem Speicher 120 verbunden und der Speicher 120 ist mit der Schnittstelle 140 verbunden. Im Speicher 120 können sich Bewegungsdaten 130 befinden. Bei dem Bewegungssensor 110 kann es sich beispielsweise um ein miniaturisiertes Messsystem handeln, dass als ein 3D-Beschleunigungssensor 170 mit einem Drucksensor 160 ausgeführt ist. Wobei der Druckmesser 160 in dem 3D-Beschleunigungssensor 170 integriert sein kann oder als zusätzliches Bauteil ausgeführt ist.

Der Bewegungssensor 110 erfasst kontinuierlich die Bewegungen des Kfz-Zündschlüssels 100, wobei der 3D-Beschleunigungssensor 170 Bewegungen des Kfz-Zündschlüssels in alle 3 Richtungen des Raumes erfasst und der Drucksensor 160 über die barometrische Höhenformel eine Schätzung der jeweils aktuellen Höhe liefert. Aus den erfassten Bewegungen gewinnt der Bewegungssensor die Bewegungsdaten 130 welche im Speicher 120 des Kfz-Zündschlüssels 100 abgelegt werden. Die gespeicherten Bewegungsdaten 130, beispielsweise Beschleunigungsdaten und Daten über Höhenunterschiede können über die Schnittstelle 140 an das externe Gerät 150 übertragen werden. Die erfassten 3D-Beschleunigungsdaten und Daten über Höhenunterschiede also Rohdaten 134 können beispielsweise im externen Gerät 150 mittels Algorithmen ausgewertet werden, um einerseits die Art der Bewegung (sitzen, stehen, liegen, gehen, joggen, rennen, Rad fahren und Treppensteigen) und andererseits die Intensität und Dauer der Bewegung sowie den zurückgelegten Höhenunterschied zu ermitteln.

Die Aufzeichnung der Bewegungsdaten 130 bzw. Vitalparameter setzt voraus, dass der Kfz-Zündschlüssel 100 sich möglichst nah am Körper und nicht in einer Tragetasche oder einem locker getragenen Kleidungsstück befindet, sonst werden die Messdaten verfälscht. Es ist denkbar, dass in einem weiteren Ausführungsbeispiel der Kfz-Zündschlüssel 100 eine Auswerteeinrichtung 180 umfasst, welche ausgebildet ist, um aus den von dem Bewegungssensor 110 gelieferten Rohdaten 134 klassifizierte Aktivitätsinformationen 132 als Bewegungsdaten 130 zu erhalten.. Der Kfz-Zündschlüssel 100 kann daher als intelligentes System betrachtet werden, welches die gesammelten Daten bzw. Bewegungsdaten 130, beispielsweise als 3D-Beschleunigung und Höhenänderung als Rohdaten 134 des Beschleunigungssensors 110 verarbeitet und verschiedene Bewegungsklassen, beispielsweise Ruhen, also Sitzen, Liegen, Stehen und Ähnliche, Gehen, Laufen, Treppe Hoch und Runter steigen, Radfahren usw. erkennt. Das System bzw. der Zündschlüssel 100 kann weiterhin in der Lage sein die Intensität der jeweiligen Bewegung festzustellen.

Die Berechnung der Höhenänderung aus den Barometerdaten und damit der Drucksensor 160 des Bewegungssensors 110 ist nicht zwingend notwendig, kann aber zu Verbesserung, des in der Auswerteeinrichtung 180, durchgeführten Verfahrens zur Erhaltung der klassifizierten Aktivitätsinformationen 134 genutzt werden.

Die Bewegungsdaten 130 können, als von dem Bewegungssensor 110 gelieferte Rohdaten 134, beispielsweise als 3D-Beschleunigungs- und Höhendaten oder auch als klassifizierte Aktivitätsinformationen 132 vorliegen.

Mit anderen Worten gesagt, werden die vom Bewegungssensor 110 gelieferten Rohdaten 134 von der Auswerteeinrichtung 180 als Aktivitätsinformationen 132 klassifiziert, wobei die Aktivitätsinformationen 132 die Aktivitätsklassen und Intensitäten der Bewegungen des Benutzers beschreiben. Das Vorhandensein einer Auswerteeinheit 180 im Kfz-Zündschlüssel 100 ermöglicht damit die Klassifizierung der Bewegungen bzw. der aufgenommen Rohdaten 134 als Bewegungsdaten 130 eines Benutzers des Kfz-Zündschlüssels 100 und eine Information des Benutzers über seine Aktivitätsdaten, basierend auf den klassifizierten Aktivitätsinformationen 132. Zur Anzeige von Rückmeldungen, beispielsweise des Aktivitätslevels an den Anwender bzw. Benutzer oder Träger des Autoschlüssels bzw. Kfz-Zündschlüssels 100, kann der Kfz-Zündschlüssels 100 weiterhin mit einer Anzeige 190, beispielsweise einer LED-Skala oder ähnlichem versehen sein. Die über einen bestimmten Zeitraum berechnete Aktivität des Anwenders kann dann beispielsweise, direkt auf dem Kfz-Zündschlüssel 100 mittels einer adäquaten Anzeige 190, beispielsweise LED-Skala, TFT-Display, OLED-Display und ähnlichen dargestellt werden. Der Kfz-Zündschlüssels 100 dient daher als portables "Feedback System" zur Überwachung, Aufzeichnung und Rückmeldung der Aktivitätsdaten eines Benutzers.

Dies ermöglicht weiterhin, beispielsweise, dass bei bestimmten Bewegungsmustern verschiedene Funktionen des Kfz-Zündschlüssels 100 deaktiviert werden. So, kann beispielsweise die Zündschlüsselfunktion zum Starten eines Kfz deaktiviert werden, wenn die Auswerteeinrichtung 180 des Kfz-Zündschlüssels 100 ein Bewegungsmuster erkennt, welches einer Bewegung einer angetrunkenen Person ähnelt. Weiterhin kann der Kfz-Zündschlüssel 100 sämtliche Funktionen wie beispielsweise Wegfahrsperre und Fernbedienung eines möglichen bekannten Kfz-Zündschlüssels umfassen.

Das externe Gerät 150 kann beispielsweise ein Zündschloss eines Kfz oder ein PC zur Auswertung der Bewegungsdaten 130 außerhalb des Kfz sein.

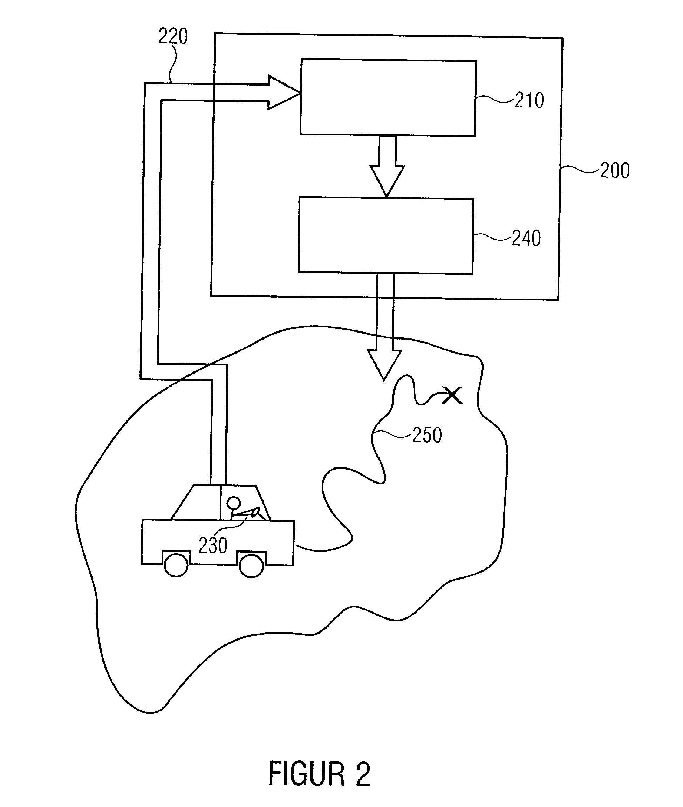

Fig. 2 zeigt eine schematische Darstellung einer Kfz-Navigationsvorrichtung 200 Die Kfz-Navigationsvorrichtung 200 umfasst eine Schnittstelle 210 zum Empfangen von Bewegungsdaten 220. Weiterhin umfasst die Kfz-Navigationsvorrichtung 200 eine Einrichtung 240 zur Berechnung einer Fahrtroute 250. Weiterhin ist in Fig. 2 ein Kfz-Benutzer 230 zu sehen.

Ein Kfz-Benutzer 230 verfügt über einen Kfz-Zündschlüssel mit einem Sensor, welcher sämtliche Bewegungen des Kfz-Benutzers 230 erfasst und speichert. Der Sensor kann beispielsweise ein 3D-Beschleunigungsensor sein, welcher in einem Alltagsgegenstand des Kfz-Benutzers integriert ist. Diese Bewegungsdaten 220 werden an die Schnittstelle 210 der Kfz-Navigationsvorrichtung 200 übertragen. Die Einrichtung 240 der Kfz-Navigationsvorrichtung 200 kann dann eine Fahrtroute 250 unter Berücksichtigung der Bewegungsdaten 220 berechnen. Wobei die berechnete Fahrtroute 250 dazu dient den Kfz-Benutzer bei der Integration sportlicher Aktivitäten in seinen Alltag zu unterstützen. Aus den gewonnenen Bewegungsdaten 220 wird beispielsweise ein Bewegungsprofil erstellt, was dem Kfz-Benutzer 230 eine detaillierte Rückmeldung über seinen Bewegungszustand gibt.

Basierend auf dem berechneten Bewegungsprofil berechnet die Kfz-Navigationsvorrichtung 200 beispielsweise Vorschläge für das Abstellen des Fahrzeugs in einem größeren Umkreis um das Ziel. Bei deren Berechnung fließen Informationen über die lokalen Gegebenheiten ein, so dass z.B. bevorzugt Parkanlagen, Fußgängerzonen usw. für die letzten Meter vorgeschlagen werden.

Weiterhin kann die Kfz-Navigationsvorrichtung beispielsweise über eine Datenbank mit Adressen wichtiger Orte verfügen. So kann die Kfz-Navigationsvorrichtung 200, abhängig von den Bewegungsdaten 220 bzw. dem Bewegungsprofil, dem Kfz-Benutzer 230 Sportangebote in der Umgebung vorschlagen.

Weiterhin kann die Kfz-Navigationsvorrichtung 200 dem Kfz-Benutzer 230, abhängig von den Bewegungsdaten 220 bzw. dem Bewegungsprofil, einen Fußweg als Alternative für eine Fahrtroute 250 vorschlagen.

Weiterhin kann das berechnete Bewegungsprofil vom Kfz-Benutzer 230 beispielsweise über eine interaktive Applikation, die in die Kfz-Navigationsvorrichtung 200 oder ein vergleichbares Multimediasystem des Autos eingebaut ist, abgerufen werden, um den Kfz-Benutzer 230 zu motivieren aktiver zu werden und sich sukzessive einen gesunden Lebenswandel anzueignen.

Zudem kann die Kfz-Navigationsvorrichtung 200 beispielsweise ein Benutzerprofil mit aktuellen (zur Zeit erreichten) Aktivitätswerten erfassen und erlaubt dem Kfz-Benutzer 230 in Form von Sollwerten (Ziele) seine körperliche Aktivität einzustellen.

Die Übertragung der Daten zwischen dem am Körper getragenen Sensor und der Kfz-Navigationsvorrichtung 200 kann beispielsweise kabellos erfolgen. Gemäß der vorliegenden Erfindung, ist der am Körper getragene Sensor hierbei als ein Kfz-Zündschlüssel 100 wie er vogehend beschrieben wird, ausgeführt, uns ausgelegt um an die Schnittstelle 210 der Kfz-Navigationsvorrichtung 200 die Bewegungsdaten 220 zu übertragen.

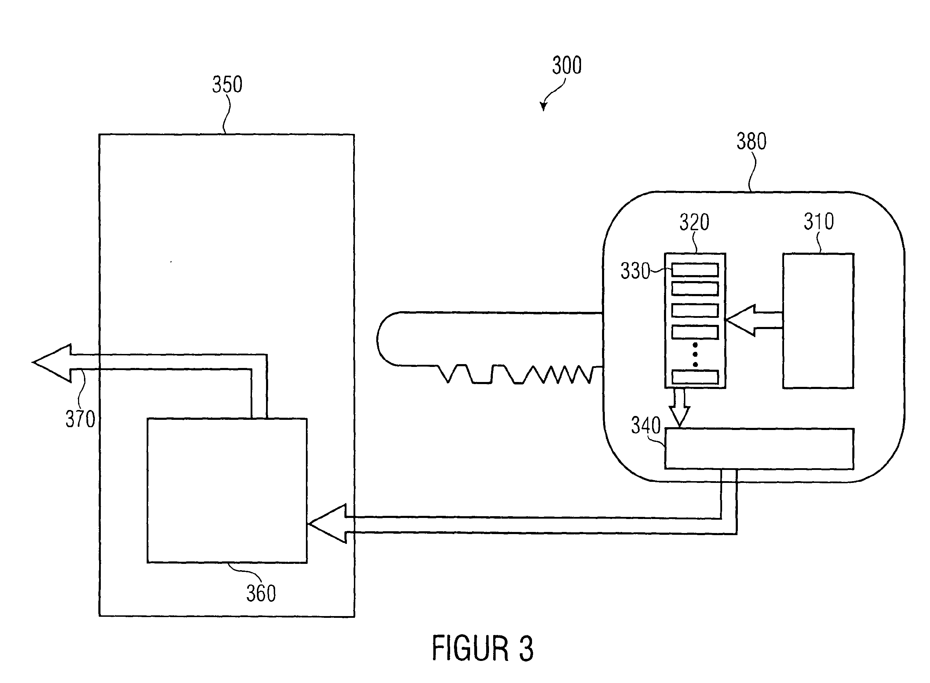

Fig. 3 zeigt eine schematische Darstellung eines Kfz-Systems 300 gemäß einem dritten Ausführungsbeispiel der vorliegenden Erfindung. Das Kfz-System 300 umfasst einen Kfz-Zündschlüssel 380 und eine Kfz-Steuereinrichtung 350. Der Kfz-Zündschlüssel 380 umfasst einen Bewegungssensor 310 sowie einen Speicher 320 und eine Schnittstelle 340 zum Übertragen von Bewegungsdaten 330. Die Kfz-Steuereinrichtung 350 umfasst eine zweite Schnittstelle 360 zum Empfangen von Bewegungsdaten 330 und zum Durchführen von Kfz-Steuerungsaufgaben 370.

Der Bewegungssensor 310 des Kfz-Zündschlüssels 380 erfasst die Bewegungen des Kfz-Zündschlüssels 380, wobei aus den erfassten Bewegungen Bewegungsdaten 330 gewonnen werden, welche im Speicher 320 abgespeichert sind. Die Bewegungsdaten 330 repräsentieren damit beispielsweise auch die Bewegungen eines Kfz-Benutzers des Kfz-Zündschlüssels 380. Die Bewegungsdaten 330 können über die erste Schnittstelle 340 des Kfz-Zündschlüssels 380 an die zweite Schnittstelle 360 der Kfz-Steuereinrichtung 350 übertragen werden. Die zweite Schnittstelle 360 der Kfz-Steuereinrichtung 350 kann dann abhängig von den Bewegungsdaten 330 Kfz-Steuerungsaufgaben 370 durchführen. Die Kfz-Steuereinrichtung 350 ist dabei dem Kfz-Zündschlüssel 380 zugeordnet.

Der Kfz-Zündschlüssel 380 ist ein Kfz-Zündschlüssel 100 wie er vorgehend beschrieben wurde, sein. Der Bewegungssensor 310 des Kfz-Zündschlüssels 380 kann beispielsweise als ein 3D-Beschleunigungssensor ausgeführt sein oder auch als ein 3D-Beschleunigungssensor mit einem Höhendrucksensor ausgeführt sein.

Die Kfz-Steuereinrichtung 350 ist eine Kfz-Navigationsvorrichtung 200 wie sie vorgehend beschrieben wurde, sein. Weiterhin kann die Kfz-Steuervorrichtung 350 beispielsweise direkt mit einem Kfz-Steuersystem eines Kfz verbunden sein und eine Aufnahme für den Kfz-Schlüssel 380, beispielsweise ein Zündschloss umfassen. Die Kfz-Steuereinrichtung kann dann beispielsweise ebenfalls abhängig von den empfangenen Bewegungsdaten 330 eine Stärke der Lenkhilfe des Kfz variieren und/oder eine Startfunktion des Kfz deaktivieren, wobei beispielsweise der Widerstand der Lenkung des Kfz schwerer eingestellt werden kann, falls der Kfz-Benutzer einen Bewegungsmangel aufweist. Die Startfunktion des Kfz kann beispielsweise deaktiviert werden, wenn die Bewegungsdaten 330 des Kfz-Benutzers auf einen Alkoholkonsum des Kfz-Benutzers hinweisen.

Weiterhin kann das Kfz-System 300 eine Ladevorrichtung und der Kfz-Zündschlüssel 380 einen wiederaufladbaren Energiespeicher umfassen, wobei die Ladevorrichtung ausgelegt ist, um den wiederaufladbaren Energiespeicher des Kfz-Zündschlüssels 380 zu laden und die Ladevorrichtung beispielsweise einen ersten RFID-Funkschaltkreis umfasst und der Kfz-Zündschlüssel 380 einen zweiten RFID-Funkschaltkreis umfasst, um den Energiespeicher des Kfz-Zündschlüssels 380 kabellos zu laden. Wobei die beiden RFID-Funkschaltkreise auch zur Übertragung der Bewegungsdaten zwischen dem Kfz-Zündschlüssel 380 und der Kfz-Steuervorrichtung 350 genutzt werden können. Weiterhin können die Ladevorrichtung, sowie der Kfz-Zündschlüssel 380 Kontakte umfassen, welche es ermöglichen, dass der Energiespeicher des Kfz-Zündschlüssels über die Kontakte geladen werden kann.

Weiterhin ist denkbar, dass ein Kfz-System 300 beispielsweise eine Mehrzahl von Kfz-Zündschlüsseln 380 umfasst, wobei jedem der Kfz-Zündschlüssel 380 eindeutig ein Index zugeordnet ist. Die Kfz-Steuereinrichtung 350 kann dann beispielsweise Steuerungsaufgaben 370 unter Berücksichtigung der Bewegungsdaten 330 und dem Index des Kfz-Zündschlüssels 380 durchführen. Ein Kfz, welches beispielsweise von einem Ehepaar geteilt wird, wobei jeder der Ehepartner seinen eigenen Kfz-Zündschlüssel 380 besitzt und welches mit einem Kfz-System 300 gemäß der vorliegenden Erfindung ausgerüstet ist, kann dann seine Fahreigenschaften abhängig vom jeweiligen Benutzer variieren. So kann der erste Ehepartner beispielsweise die Variierung der Lenkhilfe deaktivieren, während der zweite Ehepartner die Variierung der Lenkhilfe aktiviert hat.

Weiterhin kann die Übertragung der Bewegungsdaten 330 vom Kfz-Zündschlüssel 380 zur Kfz-Steuereinrichtung 350 beispielsweise kabellos (beispielsweise durch induktive Kopplung) oder über Kontakte im Zündschloss des Kfz und am Kfz-Zündschlüssel 380 erfolgen.

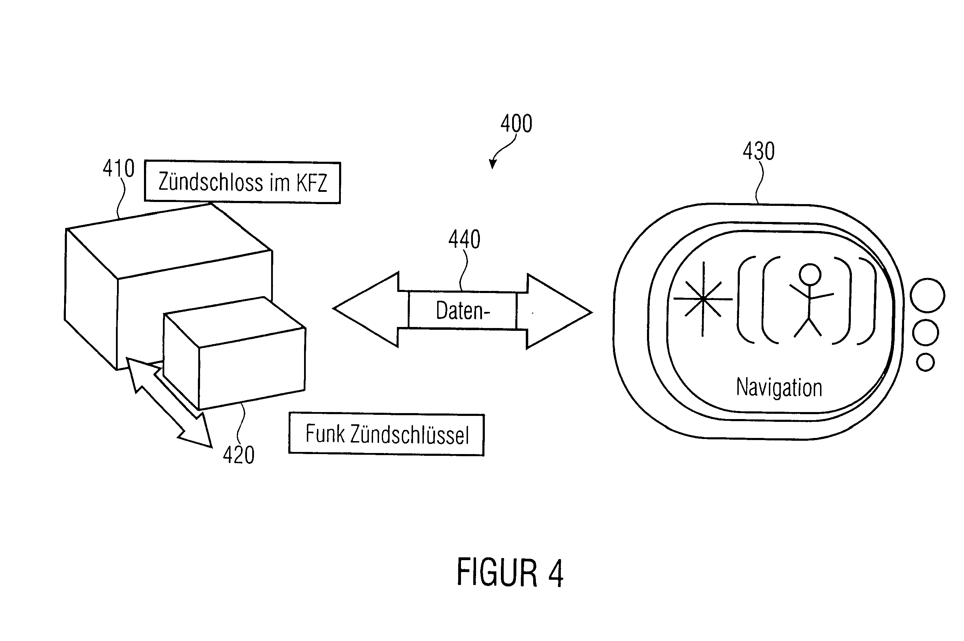

Fig. 4 zeigt eine schematische Darstellung eines Kfz-Systems 400 gemäß einem vierten Ausführungsbeispiel der vorliegenden Erfindung. Das Kfz-System 400 umfasst einen Kfz-Zündschlüssel 420, welcher als ein Funkzündschlüssel ausgeprägt ist. Weiterhin umfasst das Kfz-System 400 eine Kfz-Steuervorrichtung, welche ein Zündschloss 410 sowie eine Kfz-Navigationsvorrichtung 430 umfasst.

Der Kfz-Zündschlüssel 420 ist als ein Kfz-Zündschlüssel 100, wie er vorgehend beschrieben wurde, ausgeführt . Die Kfz-Navigationsvorrichtung 430 ist als eine Kfz-Navigationsvorrichtung 200, wie sie vorgehend beschrieben wurde, ausgeführt.

Der Kfz-Zündschlüssel 420 erfasst seine Bewegungen und speichert die aus den Bewegungen gewonnen Bewegungsdaten 440 in einem Speicher ab. Die Bewegungsdaten 440 können über eine erste Schnittstelle im Kfz-Zündschlüssel 420 an eine zweite Schnittstelle in der Kfz-Navigationsvorrichtung 430 übertragen werden. Die Kfz-Navigationsvorrichtung 430 kann abhängig von den empfangenen Bewegungsdaten 440 dann eine Fahrtroute berechnen.

Die Kommunikation zwischen dem Kfz-Zündschlüssel 420 bzw. Funkzündschlüssel 420 bzw. "Bewegungssensor-Autoschlüssel" und dem Kfz kann dabei über RFID, Bluetooth, andere Funktechniken im ISM-Band oder drahtgebunden über zusätzliche Kontakte in dem Zündschloss 410 erfolgen. In ähnlicher Weise kann ein Laden des Funkzündschlüssels 420 über das Zündschloss erfolgen.

Eine mögliche Erweiterung des Kfz-Systems 400 besteht in einer Ladeschale bzw. einer Ladevorrichtung bzw. einem Zündschlüsselauslesegerät bzw. einer Zündschlüsselauslesevorrichtung mit Kommunikationsstelle für die Heimanwendung, so dass die Auswertung der Daten nicht nur im Kfz, sondern auch auf einem externen System bzw. Gerät, beispielsweise auf dem heimischen oder einem anderen PC, auf einem PDA, auf einem Laptop, auf einem Fernseher und Ähnlichen erfolgen kann. Die einzelnen Komponenten des Kfz-Systems 400 können ausgebildet sein um anhand der Aktivitätsdaten des Anwenders, im und außerhalb des Autos bzw. Kfz, die zurückgelegte Route zu erfassen, zu speichern, auszuwerten, zu übertragen und anzuzeigen. Hierbei kann der Kfz-Zündschlüssel 420 als Speichermedium dienen.

Wie schon im vorherigen Absatz erwähnt kann der Kfz-Zündschlüssel 420 als Speichermedium verwendet werden, um die personenbezogenen Aktivitäts- und Bewegungsprofildaten, sowie die zurückgelegten Routen (im Kfz und/oder zu Fuß) speichern und vom Kfz in eine Heimanwendung übertragen zu können. So können die Bewegungsdaten 440 zusammen mit Kartenmaterial bzw. der Kfz-Navigationsvorrichtung 430 eine Basis für ein interaktives Fitnesscoaching oder eine Fitnesstrainingsapplikation erstellen. Mit anderen Worten, werden beispielsweise die Aktivitätsdaten und die Route auf dem Kfz-Zündschlüssel 420 gespeichert. Diese Daten können mit Hilfe des Zündschlüsselauslesegerätes, an dem externen Gerät ausgelesen, weiterverarbeitet und dargestellt werden. Auf diese Weise kann dem Anwender ein umfassendes Bild seiner geleisteten Aktivität aufgezeigt werden. Das Kfz-System 400 stellt damit ein portables Feedbacksystem als Aktivitätsbegleiter, mit der Fähigkeit Aktivitätsprofile, Aktivitätstagebücher und Ähnliches aufzeichnen, dar.

Weiterhin ist es möglich, dass der Kfz-Zündschlüssel 420 als generelles Speichermedium nicht nur für zurückgelegte Routen wie beispielsweise Fahrrouten, zu Fuß zurückgelegte Wege und Ähnliches und Aktivitätsdaten, sondern auch für eine Routenplanung genutzt werden kann. Die Routenplanung kann dementsprechend beispielsweise über ein externes Gerät, beispielsweise PC, PDA, Laptop oder Ähnliches erfolgen und auf dem Kfz-Zündschlüssel 420 gespeichert werden. Die auf dem Kfz-Zündschlüssel 420 gespeicherten Daten können automatisch über die erste Schnittstelle im Kfz-Zündschlüssel 420 an die zweite Schnittstelle in der Kfz-Navigationsvorrichtung 430 übertragen werden. Die Einstellung der Route, wichtige Punkte (sogenannten "Points of Interrest"), "Trimm dich Pfade" und Ähnliches in der Kfz-Navigationsvorrichtung 430 erfolgt automatisch, eine manuelle Eingabe des Ziels, bzw. der Zwischenziele, über die Kfz-Navigationsvorrichtung 430 entfällt.

Die Kernkomponente des hier beschriebenen Kfz-Systems 400 ist dabei ein in den Funkzündschlüssel 420 integrierter intelligenter Bewegungssensor und dessen Vernetzung mit der Navigationsvorrichtung 430 des Kfz.

Dieses System kann als ActiCoach: Portables Feedback-System der täglichen Aktivität auf Basis eines Kfz-Zündschlüssels zur Motivation des Fahrers zur Bewegung oder als Verfahren und Vorrichtung zum Monitoring und interaktive Darstellung der Bewegungsaktivitäten des Autofahrers oder als eine Vorrichtung zur Erfassung der Bewegungsaktivitäten, deren Speicherung, Übertragung, Analyse und Vergleich im Sinne eines Fitnesscoaching des Autofahrers bezeichnet werden.

Zusammenfassend lässt sich sagen, da sich das Auto bzw. Kfz längst zum Lifestyleprodukt entwickelt hat, erscheint es sinnvoll, es auch in das persönliche Fitnessprogramm und die Gesundheitsvorsorge zu integrieren. Das Auto erfasst dabei die sportlichen Aktivitäten seiner Benutzer und animiert bei Bewegungsmangel dazu, diese in den Alltag integriert auszugleichen.

Der Schlüssel des Kfz stellt aufgrund seiner Bedeutung für den Betrieb des Kfz und der daraus resultierenden Notwendigkeit, ihn mitzuführen, eine ideale Plattform für die Integration eines intelligenten Sensorsystems dar. Dies gilt in besonderem Maße für ein System zur Erfassung der körperlichen Aktivitäten, d.h. Bewegung, da es erfordert, kontinuierlich am Körper getragen zu werden. Zudem besitzt der Kfz-Zündschlüssel die Möglichkeit, die ermittelten Bewegungsdaten quasi intuitiv über das Zündschloss an das Kfz zu übertragen. Dieses Konzept hat einerseits viele Vorteile in der Gebrauchstauglichkeit und Fahrerakzeptanz, da es nicht mehr notwendig ist, ein gesondertes Messgerät oder Sensorteil zu tragen und man den Kfz-Zündschlüssel nahezu immer bei sich trägt und andererseits bietet es breite Möglichkeiten zur Systemerweiterung und Datenaustausch über Kontakte im Zündschloss oder die Anwendung von Funktechniken.

Ausführungsbeispiele der Verfahren können um alle Aspekte und Funktionalitäten der erfindunsgemäßen Vorrichtungen ergänzt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung mit Hilfe eines Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Ein Ausführungsbeispiel des erfindungsgemäßen Verfahrens umfasst somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel des erfindungsgemäßen Verfahrens umfasst somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kfz-System mit:
einem Kfz-Zündschlüssel (100); und
einer Kfz-Navigationsvorrichtung (200) mit:
einer Schnittstelle (210) zum Empfang von Bewegungsdaten (220) eines Kfz-Benutzers (230), die durch den am Körper getragenen Kfz-Zündschlüssel (100) erfasst sind; und
einer Einrichtung (240) zum Berechnen einer Fahrtroute (250) unter Berücksichtigung der Bewegungsdaten (220).

2. Kfz-System gemäß Anspruch 1,
bei dem die Einrichtung (240) zum Berechnen der Fahrtroute (250) ausgebildet ist, um abhängig von den Bewegungsdaten (220) dem Kfz-Benutzer (230) einen Zielort in der Nähe oder weiter weg von einem vom Kfz-Benutzer (230) gewünschten Zielort vorzuschlagen, so dass der Kfz-Benutzer (230) einen Weg zum gewünschten Ziel zurückliegen kann; und/oder
dem Kfz-Benutzer (230) Sportangebote in der Umgebung vorzuschlagen; und/oder dem Kfz-Benutzer (230) einen Fußweg anstatt einer Fahrtroute (250) zum gewünschten Ziel vorzuschlagen.

3. Kfz-System gemäß einem der Ansprüche 1 oder 2,
wobei die Kfz-Navigationsvorrichtung (200) ausgebildet ist, um aus den gewonnenen Bewegungsdaten (220) ein Bewegungsprofil zu erstellen, das dem Kfz-Benutzer (230) eine detaillierte Rückmeldung über seinen Bewegungszustand gibt.

4. Verfahren mit den folgenden Schritten:
a) Empfangen der von einem Kfz-Zündschlüssel aufgenommenen Bewegungsdaten (220) eines Kfz-Benutzers (230) mit einer Schnittstelle (210) einer Kfz-Navigationsvorrichtung (200).
b) Berechnen einer Fahrtroute (250) unter Berücksichtigung der empfangenen Bewegungsdaten (220) mit einer Einrichtung (240) der Kfz-Navigationsvorrichtung (200).

## Claims

1. Motor vehicle system comprising:
a motor vehicle ignition key (100); and
a motor vehicle navigation device (200) comprising:
an interface (210) for receiving movement data (220) of a motor vehicle user (230) that is captured by the motor vehicle ignition key (100) worn on the body; and
means (240) for calculating a driving route (250) while taking into account the movement data (220).

2. Motor vehicle system as claimed in claim 1,
wherein the means (240) for calculating the driving route (250) is configured to propose to the motor vehicle user (230), in dependence on the movement data (220), a destination in the vicinity of or at a distance from a destination desired by the motor vehicle user (230), so that the motor vehicle user (230) may cover a distance to reach the desired destination; and/or
to propose to the motor vehicle user (230) sport activities offered in the area; and/or
to propose to the motor vehicle user (230) a walk instead of a driving route (250) to the desired destination.

3. Motor vehicle system as claimed in claims 1 or 2,
wherein the motor vehicle navigation device (200) is configured to create, from the movement data (220) obtained, a movement profile which gives the motor vehicle user (230) detailed feedback about his/her state of movement.

4. Method comprising the steps of:
a) receiving the movement data (220), captured by a motor vehicle ignition key, of a motor vehicle user (230) by means of an interface (210) of a motor vehicle navigation device (200).
b) calculating a driving route (250) by using a means (240) of the motor vehicle navigation device (200) while taking into account the received movement data (220).

## Revendications

1. Système de véhicule automobile, aven:
une clé de contact du véhicule automobile (100); et
un dispositif de navigation pour véhicule automobile (200), avec:
une interface (210) destinée à recevoir des données de déplacement (220) d'un utilisateur du véhicule automobile (230) qui sont captées par la clé de contact du véhicule automobile portée sur le corps (100); et
un moyen (240) destiné à calculer un itinéraire de conduite (250) en tenant compte des données de déplacement (220).

2. Système de véhicule automobile selon la revendication 1,
dans lequel le moyen (240) destiné à calculer l'itinéraire (250) est conçu pour proposer à l'utilisateur du véhicule automobile (230), en fonction des données de déplacement (220), un lieu de destination à proximité du ou plus éloigné d'un lieu de destination souhaité par l'utilisateur du véhicule automobile (230), de sorte que l'utilisateur du véhicule automobile (230) puisse parcourir un trajet vers la destination souhaitée; et/ou
pour proposer à l'utilisateur du véhicule automobile (230) des activités sportives dans les environs; et/ou
pour proposer à l'utilisateur du véhicule automobile (230) un chemin pédestre au lieu d'un itinéraire de conduite (250) vers la destination désirée.

3. Système de véhicule automobile selon l'une des revendications 1 ou 2,
dans lequel le dispositif de navigation pour véhicule automobile (200) est conçu pour établir, à partir des données de déplacement acquises (220), un profil de déplacement qui donne à l'utilisateur de véhicule automobile (230) une rétroaction détaillée sur son étant de déplacement.

4. Procédé aux étapes suivantes consistant à:
a) recevoir les données de déplacement (220) d'un utilisateur de véhicule automobile (230) captées par une clé de contact du véhicule automobile par une interface (210) d'un dispositif de navigation de véhicule automobile (200).
b) calculer un itinéraire de conduite (250) en tenant compte des données de déplacement reçues (220) par un moyen (240) du dispositif de navigation pour véhicule automobile (200).
